# EUROPÄISCHE PATENTSCHRIFT

(11) **EP 0 333 126 B1**
(45) Veröffentlichungstag und Bekanntmachung des Hinweises auf die Patenterteilung: **08.06.1994**
(21) Anmeldenummer: 89104485.1
(22) Anmeldetag: 14.03.1989
(51) Int. Cl.: H04Q 3/62, H04Q 11/04, H04M 11/06

(54) **Fernmelde-Nebenstellenanlage für Breitband-Signalübertragung**
Private telecommunication exchange for broadband signal transmission
Central de télécommunication privé pour transmission de signaux à large bande

(30) Priorität: 15.03.1988 DE 3808615
(43) Veröffentlichungstag der Anmeldung: 20.09.1989
(73) Patentinhaber: Siemens Nixdorf Informationssysteme Aktiengesellschaft, 33102 Paderborn (DE)
(72) Erfinder: Lerch, Peter, D-4790 Paderborn (DE); Niemeier, Hubert, Dr., D-4790 Paderborn (DE); Blitz, Andre, D-4795 Delbrück (DE)
(74) Vertreter: Fuchs, Franz-Josef, Dr.-Ing.

(56) Entgegenhaltungen:
- EP-A- 0 239 908
- REVIEW OF THE ELECTRICAL COMMUNICATION LABORATORIES, Band 32, Heft 1, Teil 2, Januar 1984, Seiten 105-117; K. HABARA et al.: "INS model system framework"
- ELECTRICAL COMMUNICATION, Band 61, Heft 1, 1987, Seiten 110-117; W. ANDRICH et al.: "Concept and realization of the broadband ISDN"
- I.E.E.E. JOURNAL ON SELECTED AREAS IN COMMUNICATIONS, Band SAC-5, Heft 8, Oktober 1987, Seiten 1346-1355; K. HIRAIDE et al.: "Broadband switching system architecture"
- NEC RESEARCH & DEVELOPMENT, Heft 55, Oktober 1979, Seiten 84-94, Tokyo, JP; A. KITAMURA et al.: "System structure of NEAX 61 digital switching system"

## Beschreibung

Die Erfindung betrifft eine Fernmelde-Nebenstellenanlage für Breitband-Signalübertragung, mit einer Koppelfeldanordnung zur Verbindungsvermittlung zwischen mehreren Teilnehmerstationen sowie zwischen diesen und einem Breitband-Kommunikationsnetz, wobei die Breitbandsignale jeweils in teilnehmerstationsspezifische Signale umgesetzt werden und umgekehrt.

Bei der Breitband-Kommunikation können Signale mit großer Bandbreite übertragen werden. Damit wird es möglich, zwischen verschiedenen Teilnehmerstationen einen Breitbanddialog z.B. in Form von Bildfernsprechen, Videokonferenzen, schneller Datenübertragung u.ä. zu verwirklichen. Voraussetzung hierfür ist, daß ein Breitband-Kommunikationsnetz mit schnellen Übertragungsmedien, beispielsweise mit Lichtwellenleitern, vorhanden ist. Ein solches Breitband-Kommunikationsnetz stellt z.B. das "Vorläufer-Breitbandnetz" der Deutschen Bundespost sowie das ISDN (Integrated Service Digital Network) dar.

Aus der Druckschrift IEEE JOURNAL ON SELECTED AREAS IN COMMUNICATIONS, Band SAC-5, Heft 8 "Broad band switching system architecture" ist ein Breitbandkommunikationssystem zum Bilden von Breitbandnetzen bekannt, bei dem ein Übergang zu einer Fernmelde-Nebenstellenanlage nicht vorgesehen ist.

In der Druckschrift ELECTRICAL COMMUNICATION, Band 61, Heft 1 "Concept and realization of the broadband ISDN" ist ein Breitband-ISDN-Vermitttlungssystem angegeben, an das über SO- und SB-Schnittstellen Teilnehmerstationen anschließbar sind. Für die hinsichtlich Signalisierung abgestimmten SO- und SB-Schnittstellen ist in einer Vorfeldeinrichtung eine Geschwindigkeitstransformation vorgesehen. Eine weitere Umsetzung der Signale ist hierbei nicht erforderlich, da teilnehmerspezifische Signale transparent übermittelt werden.

Aus einer weiteren Druckschrift REVIEW OF THE ELECTRICAL COMMUNICATION LABORATORIES, Band 32, Heft 1 "ISDN model system frame work" ist ein Informationsnetzsystem bekannt, das durch ein digitales Vermittlungssystem und durch ein Breitbandvermittlungssystem gebildet ist, wobei die Breitbandteilnehmerstationen an das Breitbandvermittlungssystem angeschlossen sind. Die Breitbandsignale sind hierbei über das Koppelfeld des digitalen Vermittlungssystems an weitere Netze, wie beispielsweise Video, Facsimile, oder Paketnetze, vermittelbar. Eine Anpassung der Signale bzw. Breitbandsignale ist hierbei nicht erforderlich, da eine Verbindung Breitbandteilnehmerstation zu einer Teilnehmerstation des digitalen Vermittlungssystems nicht vorgesehen ist.

Zur Verbindungsvermittlung zwischen verschiedenen lokalen Teilnehmerstationen untereinander sowie zwischen diesen und einem Breitband-Kommunikationsnetz wird vorteilhaft eine elektronisch gesteuerte Fernmelde-Nebenstellenanlage eingesetzt. Diese besteht aus einer Koppelfeldanordnung, an die die einzelnen Teilnehmerstationen bzw. die Breitband-Kommunikationsnetzanschlüsse über Teilnehmeranschlußschaltungen angeschlossen sind.

Die aus dem Breitband-Kommunikationsnetz ankommenden Breitbandsignale liegen als digitale Zeitmultiplexsignale vor und müssen erst in eine für die Teilnehmerstationen auswertbare Darstellungsart umgewandelt werden. Signale dieser Art können beispielsweise analoge Videosignale und Audiosignale, aber auch digitale Datensignale mit einem vorgegebenen Signalstandard sein. In der umgekehrten Übertragungsrichtung müssen die von den Teilnehmerstationen an das Breitband Kommunikationsnetz ausgesendeten Signale in die vorgegebene Darstellungsart des Breitband-Kommunikationsnetzes umgesetzt werden. Hierzu sind Multiplex- bzw. Demultiplexeinrichtungen erforderlich, die abhängig vom Anwendungsfall auch Analog/Digital- bzw. Digital/Analog-Wandlereinrichtungen enthalten. Diese Einrichtungen können in einer einzigen Signalumsetzeinrichtung zusammengefaßt sein.

Das Umsetzen bzw. Rückumsetzen der Breitbandsignale wurde bislang so ausgeführt, daß jeder Teilnehmerstation eine Signalumsetzeinheit zugeordnet war. Das Breitbandsignal des Breitband-Kommunikationsnetzes wird bei der bekannten Ausführung den verschiedenen Teilnehmerstationen über ein digitales Koppelfeld zugeführt und erst bei der Teilnehmerstation in die für die jeweilige Teilnehmerstation geeignete Darstellungsart umgesetzt und umgekehrt. Der Aufwand für Signalumsetzeinheiten steigt also proportional der Zahl der Teilnehmerstationen an. Da die Signalumsetzeinheiten sehr kostspielig sind, insbesondere wenn sie mit Analog/Digital-Wandlern ausgerüstet sind, werden Systeme mit einer großen Zahl von Teilnehmerstationen teuer und damit unwirtschaftlich.

Es ist daher Aufgabe der Erfindung, die Zahl der erforderlichen Signalumsetzeinrichtungen unabhängig von der Zahl der Teilnehmerstationen zu begrenzen.

Für eine Anlage eingangs genannter Art löst die Erfindung diese Aufgabe dadurch, daß die Umsetzung der Breitbandsignale zwischen dem jeweiligen Breitband-Kommunikationsnetzanschluß und der Koppelfeldanordnung vorgenommen wird.

Wenn gemäß der Erfindung vorgegangen wird, so werden nur so viele Signalumsetzeinheiten benötigt, wie Breitband-Kommunikationsnetzanschlüsse vorhanden sind. Im Sonderfall, daß nur ein Breitband-Kommunikationsnetzanschluß vorgesehen ist, ist nur eine einzige Signalumsetzeinheit erforderlich, wobei die maximale Zahl anschließbarer Teilnehmerstationen durch diese Maßnahme nicht eingeschränkt wird.

Die Signalumsetzeinrichtung arbeitet in zwei Richtungen. Die vom Breitband-Kommunikationsnetz ankommenden digitalen Zeitmultiplexsignale werden auf verschiedene Informationskanäle aufgeteilt, deren Signale von den Teilnehmerstationen verarbeitet werden können. Abhängig von der Art der angeschlossenen Teilnehmerstationen sind von der Signalumsetzeinheit sowohl digitale als auch analoge Signale zu erzeugen. In umgekehrter Richtung, d.h. wenn die Teilnehmerstationen Daten an das Breitband-Kommunikationsnetz abgeben, setzt die Signalumsetzeinheit diese in ein für das Breitband-Kommunikationsnetz vorgegebenes digitales Zeitmultiplexsignal um.

Bei der Erfindung findet die Signalumsetzung zwischen dem Breitband-Kommunikationsnetzanschluß und der Koppelfeldanordnung statt. Dies bedeutet, daß die den einzelnen Informationskanälen zugehörigen physikalischen Übertragungsmedien, beispielsweise in Form von Leitungsbündeln, den jeweiligen Teilnehmerstationen zuzuführen sind, wodurch sich der Aufwand an Leitungsinstallation erhöht. Diesem Aufwand steht jedoch eine erhebliche Einsparung an kostspieligen Signalumsetzungseinheiten gegenüber. Insgesamt führen somit die erfindungsgemäßen Maßnahmen zu einer wirtschaftlich günstigen Lösung.

Eine bevorzugte Ausführungsform der Erfindung ist dadurch gekennzeichnet, daß bei einer Breitband-Signalübertragung mit mehreren Informationskanälen für jeden Informationskanal ein Koppelfeld vorgesehen ist.

Die verschiedenen Informationskanäle können sich hinsichtlich der Signalart, beispielsweise analoge oder digitale Signale, und der Kanalkapazität unterscheiden. Werden alle Informationskanäle über ein einziges Koppelfeld geleitet, so hat dieses entsprechend den verschiedenen Signalarten hohe technische Anforderungen zu erfüllen. Durch die Zuordnung jeweils eines Koppelfeldes zu einem Informationskanal ist es möglich, unter der Vielzahl handelsüblicher Koppelfelder diejenigen auszuwählen, die sich hinsichtlich der technischen und wirtschaftlichen Anforderungen besonders gut eignen. Der zusätzliche Aufwand an Koppelfeldern fällt nicht ins Gewicht, da diese verglichen mit den Signalumsetzeinheiten sehr kostengünstig sind.

Weiterhin besteht die Möglichkeit, die Koppelfelder mit Konferenzzusatzschaltungen auszustatten. Diese Schaltungen erlauben die Kommunikation zwischen mehr als zwei Teilnehmerstationen und ermöglichen so die Vermittlung von Videokonferenzen und Fernsprechkonferenzen. Durch die Verwendung jeweils eines Koppelfeldes pro Informationskanal kann jeder Teilnehmer Mehrfachkonferenzverbindungen zu anderen Teilnehmern auf verschiedenen Informationskanälen aufbauen. In der Praxis bedeutet dies, daß ein Teilnehmer gleichzeitig an unterschiedlichen Konferenzen z.B. über einen Videokanal und über einen Audiokanal teilnehmen kann.

Die Erfindung wird im folgenden anhand der Zeichnung näher erläutert. Darin zeigen:
- Figur 1: den prinzipiellen Aufbau einer Fernmelde-Nebenstellenanlage mit daran angeschlossenen Teilnehmerstationen,
- Figur 2: ankommende und abgehende Signale einer Signalumsetzeinheit,
- Figur 3: den prinzipiellen Aufbau einer Signalumsetzeinheit für ein ISDN und
- Figur 4: den prinzipiellen Aufbau einer Koppelfeldanordnung mit mehreren Koppelfeldern.

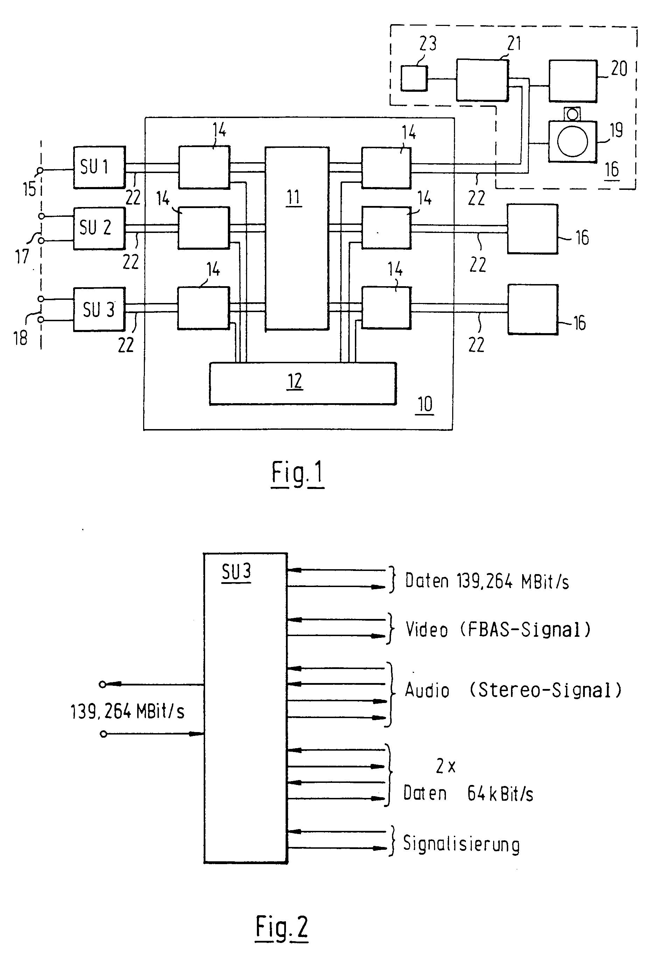

In Figur 1 ist ein Prinzipschaltbild einer Fernmelde-Nebenstellenanlage zur Breitband-Kommunikation dargestellt, die als wesentliche Bestandteile eine Vermittlungseinheit 10, Teilnehmerstationen 16 und Signalumsetzeinheiten SU1,SU2, SU3 enthält. Die Vermittlungseinheit 10 besteht aus einer Koppelfeldanordnung 11, die von einer Steuerung 12 gesteuert wird und die die Verbindungen zwischen den Teilnehmerstationen 16 einerseits und zwischen diesen und dem Breitband-Kommunikationsnetz andererseits schaltet. In diesem Ausführungsbeispiel sind drei Anschlüsse 15,17,18 an das Breitband-Kommunikationsnetz vorgesehen, wobei der Anschluß 15 eine ISDN-Schnittstelle und die Anschlüsse 17,18 Schnittstellen des "Vorläufer-Breitband-Netzes" der Deutschen Bundespost darstellen.

Die Koppelfeldanordnung 11 ist über Teilnehmeranschlußschaltungen 14 mit den Teilnehmerstationen 16 sowie mit den Signalumsetzeinheiten SU1,SU2,SU3 verbunden. Die Teilnehmeranschlußschaltungen 14 haben die Aufgabe, die von den Teilnehmerstationen 16 bzw. den Signalumsetzeinheiten SU1,SU2, SU3 ankommenden Signale in Steuersignale und Nutzsignale aufzuteilen und die Steuersignale der Steuerung 12 und die Nutzsignale der Koppelfeldanordnung 11 zuzuführen. Ferner veranlassen die Teilnehmeranschlußschaltungen 14 eine Pegelanpassung der Signale der Teilnehmerstationen 16 sowie der Signalumsetzeinheiten SU1,SU2,SU3.

Eine Teilnehmerstation 16 ist in der Figur 1 in einer gestrichelten Umrandung genauer ausgeführt. Diese Teilnehmerstation 16 enthält eine Bildfernsprecheinrichtung 19, eine Datenendeinrichtung 20, die beispielsweise eine Telefax-Einrichtung ist, und eine Steuereinrichtung 21. Diese besitzt gleichzeitig die Funktion eines Telefons und verfügt über eine Freisprecheinrichtung 23.

Aus Figur 1 wird deutlich, daß für jeden Anschluß 15,17,18 des Breitband-Kommunikationsnetzes eine Signalumsetzeinheit SU1,SU2,SU3 vorgesehen ist. Die Kommunikation zwischen den verschiedenen Teilnehmerstationen 16 untereinander und zwischen diesen und dem Breitband-Kommunikationsnetz erfordert daher für jeden Informationskanal eine physikalische Verbindung z.B. in Form eines Leitungsbündels 22. Dadurch entsteht ein höherer Aufwand an Leitungsinstallation als bei einer Zuordnung einer Signalumsetzeinheit zu jeweils einer Teilnehmerstation. Dieser Aufwand ist gegenüber der Einsparung vernachlässigbar, die sich dadurch ergibt, daß pro Anschluß an das Breitband-Kommunikationsnetz nur eine Signalumsetzeinheit erforderlich ist, unabhängig von der Zahl der an die Vermittlungseinheit 10 angeschlossenen Teilnehmerstationen 16.

In Figur 2 sind die ankommenden und abgehenden Signale der Signalumsetzeinheit SU3 dargestellt. Ein Breitbandsignal mit einer Bitrate von 139,264 MBit/s wird der Signalumsetzeinheit SU3 aus dem Breitband-Kommunikationsnetz zugeführt. Das Breitbandsignal besteht aus einem digitalen Zeitmultiplexsignal, das über die Signalumsetzeinheit SU3 auf verschiedene Informationskanäle aufgeteilt wird, deren Signale von den Teilnehmerstationen 16 verarbeitet werden können. In diesem Beispiel wird das Breitbandsignal auf einen digitalen Datenkanal mit 139,264 MBit/s, einen Videokanal mit einem analogen FBAS-Signal (Farb-Bild-Austast-Synchronisations-Signal), einen Audiokanal mit zwei analogen Stereosignalen, zwei digitale Datenkanäle mit den Datenraten 64 kBit/s sowie einen Signalisierungskanal aufgeteilt. Der Signalisierungskanal enthält Signale zur Steuerung des Verbindungsaufbaus und des Verbindungsabbaus sowie weitere Prüfsignale. Die Signalumsetzeinheit arbeitet bidirektional, d.h. bei Umkehrung der Übertragungsrichtung werden die Signale der Informationskanäle zu einem einzigen Signal zusammengefaßt und als digitales Zeitmultiplexsignal an das Breitband-Kommunikationsnetz abgegeben.

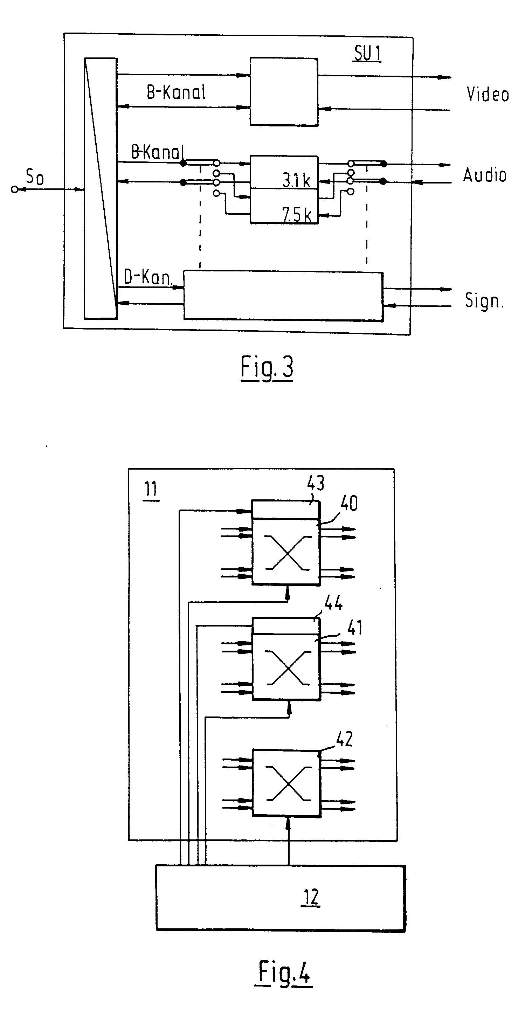

In Figur 3 ist die Signalumsetzeinheit SU1 für eine ISDN-Schnittstelle dargestellt. Die Signale, die aus dem Breitband-Kommunikationsnetz über den Basisanschluß So an der Signalumsetzeinheit SU1 ankommen, werden auf drei Informationskanäle umgesetzt. Gemäß dem ISDN-Standard wird ein B-Kanal für die Übertragung des analogen Video-Signals, ein weiterer B-Kanal für die Übertragung eines Audio-Signals, das für Fernsprecheinrichtungen zwei verschiedene Bandbreiten mit 3,1 kHz bzw. 7,5 kHz besitzt und ein D-Kanal für die Übertragung von Steuersignalen verwendet. Auch bei dieser Signalumsetzeinheit SU1 ist die Übertragungsrichtung umkehrbar.

Figur 4 zeigt eine genauere Ausführung der Koppelfeldanordnung 11 zusammen mit der Steuerung 12. Die Koppelfeldanordnung 11 besteht in diesem Beispiel aus mehreren Koppelfeldern 40,41,42, die jeweils bestimmten Informationskanälen zugeordnet sind. Die Koppelfelder 40 und 41 sind mit Konferenzzusatzschaltungen 43,44 ausgestattet. Diese ermöglichen das Zuschalten mehrerer Teilnehmerstationen 16, wodurch die Teilnehmer untereinander in Form einer Konferenz in Dialog treten können. Da jeder Informationskanal ein eigenes Koppelfeld belegt, können eine oder mehrere Teilnehmerstationen 16 an verschiedenen Konferenzen teilnehmen, wenn diese auf verschiedenen Informationskanälen stattfinden.

## Patentansprüche

1. Fernmelde-Nebenstellenanlage (10) für Breitband-Signalübertragung, mit einer Koppelfeldanordnung (11) zur Verbindungsvermittlung zwischen anschließbaren Teilnehmerstationen (16), wobei die Breitbandsignale jeweils in teilnehmerstationsspezifische Signale umgesetzt werden und umgekehrt,
**dadurch gekennzeichnet**,
daß Mittel (SU1, SU2, SU3) zur Umsetzung zwischen den jeweiligen Breitband-Kommunikationsnetzanschluß (15, 17, 18) und der Koppelfeldanordnung (11) vorgesehen sind.

2. Fernmelde-Nebenstellenanlage nach Anspruch 1,
**dadurch gekennzeichnet**,
daß die Koppelfeldanordnung (11) derart ausgestaltet ist, daß bei einer Breitband-Signalübertragung mit mehreren Informationskanälen für jeden Informationskanal ein Koppelfeld (40, 41, 42) vorgesehen ist.

## Claims

1. Private telecommunication branch exchange (10) for broadband signal transmission, comprising a switching network arrangement (11) for switching connections between connectable subscriber stations (16), the broadband signals in each case being converted into subscriber-station-specific signals and conversely, characterized in that means (SU1, SU2, SU3) for conversion between the respective broadband communication network interface (15, 17, 18) and the switching network arrangement (11) are provided.

2. Private telecommunication branch exchange according to Claim 1, characterized in that the switching network arrangement (11) is constructed in such a manner that one switching network (40, 41, 42) is provided for each information channel in the case of a broadband signal transmission comprising a number of information channels.

## Revendications

1. Central privé de télécommunications (10) pour la transmission de signaux large bande, comportant un dispositif de champ de couplage (11) pour la commutation de liaison entre des postes d'abonnés (16) susceptibles d'être reliés, les signaux large bande étant convertis respectivement en des signaux spécifiques aux postes d'abonnés et inversement,
caractérisé en ce qu'il est prévu des moyens (SU1, SU2, SU3) de conversion entre le raccordement respectif du réseau de communication large bande (15, 17, 18) et le dispositif de champ de couplage (11).

2. Central privé de télécommunication suivant la revendication 1, caractérisé en ce que le dispositif de champ de couplage (11) est agencé de telle sorte que, lors d'une transmission de signaux large bande avec plusieurs canaux de transmission d'informations, il est prévu un champ de couplage (40, 41, 42) pour chaque canal de transmission d'informations.
